# EUROPÄISCHE PATENTSCHRIFT

(11) **EP 1 210 540 B1**
(45) Veröffentlichungstag und Bekanntmachung des Hinweises auf die Patenterteilung: **10.11.2004**
(21) Anmeldenummer: 00963942.8
(22) Anmeldetag: 31.08.2000
(51) Int. Cl.: F16L 27/08, F16L 41/03, E03B 7/07, F04B 53/16

(54) **DRUCKSTUTZEN FÜR EIN PUMPE**
PRESSURE JOINT FOR A PUMP
RACCORD DE TUYAU DE REFOULEMENT POUR POMPE

(30) Priorität: 03.09.1999 DE 19942189
(43) Veröffentlichungstag der Anmeldung: 05.06.2002
(73) Patentinhaber: Oase GmbH & Co. KG, 48477 Hörstel (DE)
(72) Erfinder: HOFFMEIER, Dieter, 49479 Ibbenbüren (DE)
(74) Vertreter: Meissner, Peter E., Dipl.-Ing.
(86) Internationale Anmeldenummer: PCT/DE2000/002963
(87) Internationale Veröffentlichungsnummer: WO 2001/018441

(56) Entgegenhaltungen:
- EP-A- 0 819 474
- DE-A- 19 923 350
- FR-A- 817 120
- FR-A- 902 066
- FR-A- 1 220 110
- US-A- 5 617 999

## Beschreibung

Die vorliegende Erfindung betrifft ein Anschlußstück für einen Pumpendruckstutzen gemäß Oberbegriff von Anspruch 1.

Ein solches Anschlußstück ist aus US-A-5,617,999 bekannt. Die drosselbare Abgangsöffnung ist als vertikal ausgerichtetes Anschlußstück zur Fächerbildung (Sprinkler) ausgebildet. Dieses vertikale Anschlußstück weist ein Drosselorgan zur Einstellung der Sprengerwirkung auf.

Aus FR 902 066 A ist ein Anschlußstück bekannt, daß einen Anschluß für die Pumpe und eine Abgangsöffnung für den Anschluß eines Schlauches oder Rohres aufweist, wobei die beiden Anschlüsse winkelverstellbar sind. Ein solches winkelsverstellbares Anschlußstück ist auch aus US-A-2,581,047 bekannt.

Ein Nachteil der bekannten Anschlußstücke ist, daß für die beiden in der Gartentechnik gern genutzten Funktionsweisen "Filtern" und "Fontänenbildung" zwei unterschiedliche Anschlußstücke verwendet werden müssen.

Die Aufgabe der vorliegenden Erfindung ist daher, ein Anschlußstück zu schaffen, das an die beiden Funktionsweisen "Filtern" und "Fontänenbildung" angepaßt ist.

Die Aufgabe wird erfindungsgemäß durch die kennzeichnenden Merkmale des Anspruchs 1 gelöst.

Aufgrund der vorliegenden Erfindung ist es möglich, ein und dasselbe Anschlußstück für zwei unterschiedliche Funktionen zu verwenden und dies sogar gleichzeitig, indem eine Teilmenge Teichwasser durch zur Fontänenbildung genutzt wird während gleichzeitig die Restmenge in einen Filter gepumpt wird.

Eine Ausführungsform der vorliegenden Erfindung wird im folgenden anhand der Zeichnungen näher beschrieben. Es zeigen:
- Fig. 1: ein schematischer Längsschnitt durch das erfindungsgemäße Anschlußstück in einer Betriebsstellung "Leerpumpen";
- Fig. 2: eine schematische perspektivische Außenansicht des Anschlußstückes aus Fig. 1 in gegenüber Fig. 1 um 180° gedrehter Position.

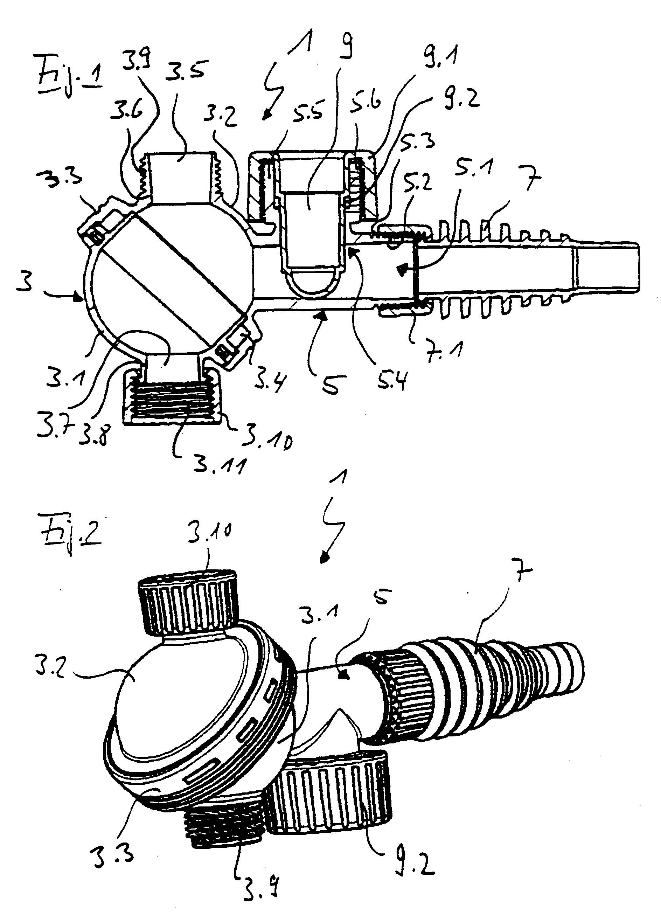

In Fig. 1 ist ein erfindungsgemäßes Anschlußstück 1 im Längsschnitt dargestellt. Das Anschlußstück 1 umfaßt ein Gelenkteil 3 und ein Stutzenteil 5.

Das Gelenkteil 3 umfaßt ein als obere Halbschale ausgebildetes erstes Gelenkelement 3.2 und ein als untere Halbschale ausgebildetes zweites Gelenkelement 3.1, die in einem Verbindungsbereich 3.3 auf einer Drehebene um 360° drehbar miteinander verbunden sind. Im Verbindungsbereich 3.3 ist ein Raum 3.4 für Dichtungen bzw. einen Dichtungsring vorgesehen. Bei Einlegung einer Dichtung ist die Verwendung auch für eine Trockenaufstellung geeignet.

Solche Drehverbindungen sind allgemein bekannt und müssen daher hier nicht näher beschrieben werden.

In der oberen Halbschale des Gelenkteils 3 ist eine erste Umfangsöffnung 3.5 mit einem ersten Abgang-Anschluß 3.6 für einen ersten Abgang, z. B. zu einem Filter, ausgebildet und in der unteren Halbschale ist eine zweite Umfangsöffnung 3.7 mit einem Pumpenanschluß 3.8 für eine Verbindung mit einer Pumpe ausgebildet (nicht dargestellt).

Die Längsachsen der Anschlüsse 3.6 und 3.8 verlaufen in einem Winkel kleiner 90° zur Drehebene, vorzugsweise in einem Winkel von etwa 45°, und sind also um eine senkrechte Achse zur Drehachse der Drehebene rotationssymmetrisch angeordnet. In der vorliegenden Ausführungsform liegen die Längsachsen der Anschlüsse 3.6 und 3.8 auch in ihrer Symmetriestellung in ein und derselben vertikalen Ebene.

Die Anschlüsse 3.6 und 3.8 weisen vorzugsweise ein Außengewinde 3.9 auf, so daß eine Überwurfmutter 3.10 oder ein ähnliches Bauteil mit entsprechendem Innengewinde 3.11 aufgeschraubt werden kann. Es sind aber auch alle weiteren bekannten Schraub- und Steckverschlußsysteme an den Anschlüsse 3.6 und 3.8 einsetzbar.

Das Stutzenteil 5 sitzt auf der oberen Halbschale des Gelenkteils 3, also auf der gleichen Halbschale wie der erste Abgang-Anschluß 3.6, und hat eine Öffnung 5.1 mit einem zweiten Abgang-Anschluß 5.2, z.B. für einen Fontänenbildner. An dem zweiten Abgang-Anschluß 5.2 ist in der vorliegenden Ausführungsform ein Außengewinde 5.3 ausgebildet, so daß z. B. eine Stufenschlauchtülle 7 zum Aufziehen eines Schlauches mit einer Überwurfmutter 7.1 daran festgelegt werden kann.

Das Stutzenteil 5 weist an seinem Umfang eine weiter Öffnung 5.4 mit einem Anschlußstück 5.5 auf. Die Längsachse des Anschlußstücks 5.5 liegt vorzugsweise auch in dergleichen vertikalen Ebene wie die Längsachse des ersten Abgang-Anschlusses 3.6 der oberen Halbschale.

Das Anschlußstück 5.5 weist ein Außengewinde 5.6 auf. Ein Drosselorgan 9 mit einer an eine Innenkontur des Anschlußstücks 5.5 angepaßten Außenkontur und mit einer Überwurfmutter 9.1 mit einem an das Außengewinde 5.6 angepaßten Innengewinde ist durch das Anschlußstück 5.5 und die Öffnung 5.4 hindurch in das Stutzenteil 5 eindrehbar. Dadurch kann ein Strömungsweg in dem Stutzenteil 5 verengt oder erweitert werden. Die dadurch bewirkte Druckveränderung im Pumpwasser führt zu einer entsprechend veränderten Austrittscharakteristik ("Fontänenbildung"). Zwischen dem Drosselorgan 9 und dem Anschlußstück 5.5 ist ein Dichtungselement 9.2 ausgebildet, um eine dichte Verbindung zu gewährleisten.

Im Betrieb kann nun das Stutzenteil 5 über das Gelenkteil 3 wahlweise in eine vertikale Ausrichtung oder eine horizontale Ausrichtung oder aber in eine beliebige Zwischenstellung gedreht werden. In der vertikalen Ausrichtung kann entweder das Anschlußstück 3.6 mit der Überwurfmutter 3.10 verschlossen werden, um so ausschließlich über das Drosselorgan 9 eine Fontänenbildung zu provozieren, oder aber offen bleiben, so daß ein Teilstrom für die Fontänenbildung genutzt wird, während gleichzeitig ein Reststrom in einen Filter gepumpt wird.

Wenn nun Teichwasser ausschließlich in einen Filter gepumpt werden soll, oder gar leer gepumpt werden soll, kann das Stutzenteil 5 in die in Fig. 1 oder Fig. 2 dargestellte Position zurückgedreht werden und über das Drosselorgan 9 vollständig verschlossen werden. Dann wird die ggf. vorhandene Überwurfmutter 3.10 von dem Anschlußstück 3.6 entfernt und ein Schlauch, ein Rohr o. dgl. angeschraubt.

## Patentansprüche

1. Anschlußstück für einen Pumpendruckstutzen, mit einem Pumpenanschluß und mit einem ersten Abgang-Anschluß sowie einem zweiten drosselbaren Abgang-Anschluß,
**dadurch gekennzeichnet,**
**daß** der zweite drosselbare Abgang-Anschluß (5.2) zusammen mit dem ersten Abgang-Anschluß (3.6) auf einem ersten Gelenkelement (3.2) eines Gelenkteils (3) angeordnet ist und in bezug zu dem auf einem zweiten Gelenkelement (3.1) angeordneten Pumpenanschluß (3.8) winkelverstellbar ist.

2. Anschlußstück nach Anspruch 1,
**dadurch gekennzeichnet,**
**daß** der drosselbare Abgang-Anschluß (5.2) bei vertikaler Position des Pumpenanschlusses (3.8) zwischen einer horizontalen und einer vertikalen Position drehbar ist.

## Claims

1. Coupling for a pressure joint of a pump, with a pump connection and with a first outlet connection and a second, throttleable, outlet connection,
**characterised in that**
the second, throttleable, outlet connection (5.2) is positioned, together with the first outlet connection (3.6), on a first articulated element (3.2) of an articulated part (3), and its angle can be adjusted in relation to the pump connection (3.8) which is positioned on a second articulated element (3.1).

2. Coupling as in Claim 1,
**characterised in that**
the throttleable outlet connection (5.2) can be turned between the horizontal and vertical positions when the pump connection (3.8) is in the vertical position.

## Revendications

1. Pièce de raccord pour un tuyau de refoulement de pompe, comportant un raccord de pompe et un premier raccord de sortie, ainsi qu'un second raccord de sortie étranglable,
**caractérisée en ce que** le second raccord de sortie étranglable (5.2) est agencé avec le premier raccord de sortie (3.6) sur un premier élément d'articulation (3.2) d'une articulation (3) et est angulairement réglable par rapport au raccord de pompe (3.8) agencé sur un second élément d'articulation (3.1).

2. Pièce de raccord selon la revendication 1,
**caractérisée en ce que** le raccord de sortie étranglable (5.2) peut, lorsque le raccord de pompe (3.8) est en position verticale, tourner entre une position horizontale et une position verticale.
